Europäisches Patentamt

(19) European Patent Office    (11) Numéro de publication: **0 150 644**
**B1**
Office européen des brevets

(12)                        **FASCICULE DE BREVET EUROPEEN**

(45) Date de publication du fascicule du brevet:    (51) Int. Cl.⁴: **H 01 R 35/00,** B 62 D  1/04
**16.09.87**

(21) Numéro de dépôt: **84402586.6**

(22) Date de dépôt: **13.12.84**

(54) **Bague de transmission électrique entre deux pièces en rotation.**

(30) Priorité: **21.12.83  FR 8320519**                    (73) Titulaire: **JAEGER, 2, rue Baudin,**
                                                        **F-92303 Levallois-Perret (FR)**

(43) Date de publication de la demande:
**07.08.85 Bulletin 85/32**                              (72) Inventeur: **Chretien, Louis, 20, rue des Chênes,**
                                                        **F-92150 Suresnes (FR)**

(45) Mention de la délivrance du brevet:
**16.09.87 Bulletin 87/38**                              (74) Mandataire: **Martin, Jean-Jacques et ai, Cabinet**
                                                        **REGIMBEAU 26, Avenue Kléber, F-75116 Paris (FR)**

(84) Etats contractants désignés:
**DE GB IT**

(56) Documents cités:
**DE - B - 1 102 848**
**FR - A - 2 488 562**
**US - A - 2 319 443**

## Description

La présente invention concerne une bague de transmission électrique destinée à être montée entre la colonne de direction et le volant d'un véhicule automobile, pour assurer la liaison électrique en rotation entre le commutateur de commande de différentes functions, placé sur le volant et les récepteurs des organes à commander.

L'évolution actuelle des équipements des véhicules automobiles est telle que le conducteur dispose d'un nombre de plus en plus grand d'appareils électriques ou électroniques (ordinateur de bord, autoradio, limiteur de vitesse etc...) dont les commandes, s'ajoutant aux dispositifs classiques (indicateur de direction, éclairage, essuie-glaces...) sont disposées sur le tableau de bord et autour du volant. Leur manoeuvre n'est pas toujours aisée, en particulier durant la marche du véhicule et peut même, alors, se révéler dangereuse. C'est pourquoi il est commode de rassembler la plupart de ces fonctions sur le volant, à proximité de la main du conducteur. A ce moment se pose le problème de la continuité de la liaison électrique entre les éléments de commande, entraînés en rotation avec le volant et les dispositifs récepteurs dont les fils de liaison passent par la colonne de direction. Dans les dispositifs actuels, le contact électrique est assuré par un piston situé sur la colonne de direction qui coopère avec une piste circulaire solidaire du volont. De cette façon, on ne peut avoir qu'un seul point de contact (le piston) et les pistes doivent être prévues suffisamment larges pour palier les dispersions de coaxialité entre les différents éléments, ce qui n'autorise pas un grand nombre de pistes, donc de commandes.

Des systèmes de transmission électrique du type bague entre deux pièches en rotation ont été décrits notamment dans le brevet US-2 319 443. Ces systèmes de transmission comportent essentiellement une bague composée d'une série de n anneaux conducteurs solidaires d'un élément fixe, ces anneaux coopérant avec une deuxième série d'anneaux conducteurs solidaires d'un élément rotatif. Chacune des deux séries est séparée des paires voisines au moyen d'une rondelle électriquement isolante.

Ce type de système de transmission électrique apparaît encombrant et en raison de son application aux tourelles de pièces d'artillerie nécessite la mise en oeuvre d'éléments robustes mais destinés à fonctionner avec des frottements importants.

La présente invention se propose de remédier à ces inconvénients. Pour ce faire, elle propose l'utilisation d'une bague de transmission électrique montée entre la colonne de direction et le volant d'un véhicule automobile pour assurer la liaison en rotation entre un commutateur de commande monté sur le volant et les récepteurs des organes à commander, la bague étant composée d'une série de n anneaux conducteurs solidaires d'une douille fixée sur la colonne de direction qui coopèrent électriquement avec une deuxième série de n anneaux également conducteurs solidaires en rotation d'une ambase fixée sur le volant. Chaque paire de contacts est formée par un anneau de chacune des deux séries et séparée des paires voisines au moyen d'une rondelle électriquement isolante. La rondelle isolante est contenue alternativement entre deux anneaux solidaires en rotation du volant puis entre deux anneaux solidaires de la colonne de direction.

D'autres caractéristiques de l'invention apparaîtront à la lecture de la description qui va suivre et en regard des dessins annexés, donnés à titre d'exemple non limitatif, et sur lesquels:

— la fig. 1 est une vue en coupe d'une bagne selon l'invention,

— la fig. 2 est une vue en coupe du montage de la bague sur le volant,

— la fig. 3 est un schéma de deux variantes d'empilement des anneaux de contact.

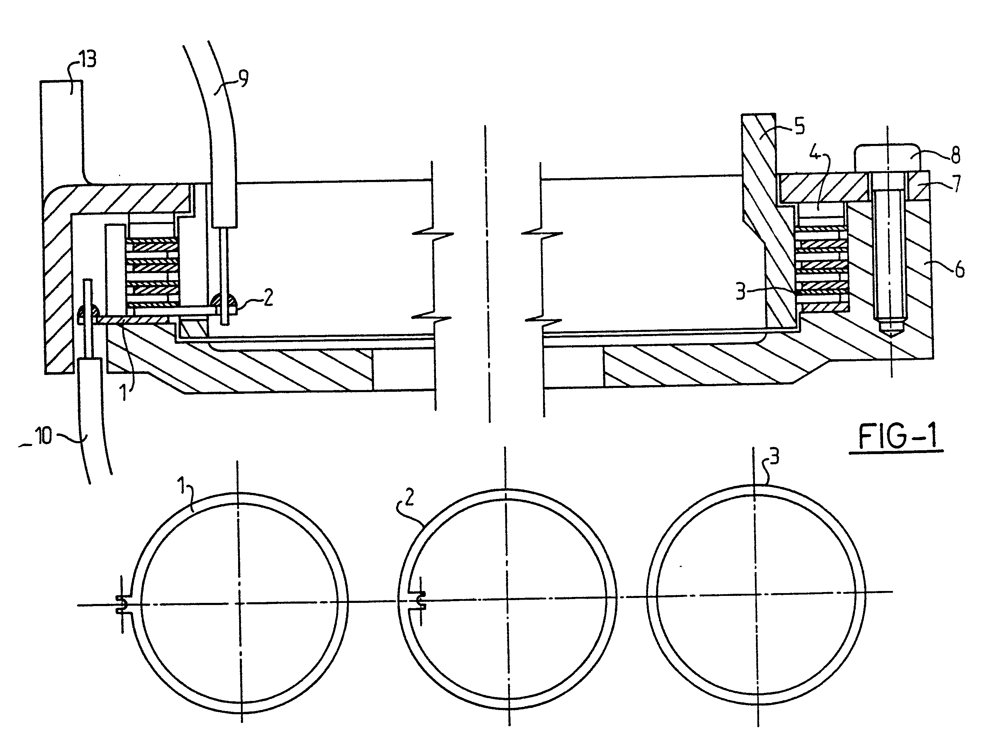

La bague de transmission selon l'invention est composée d'une série d'anneaux conducteurs 2 (fig. 1) rendus solidaires d'une douille 5, détrompée sur la colonne de direction 11, lesquels coopèrent, en rotation, avec une deuxième série d'anneaux 1, solidaires en rotation d'une embase 6 fixée sur le volant 12. Chaque paire de contact, formée par un anneau extérieur 1 et l'anneau intérieur 2 coopérant, est électriquement isolée des paires voisines au moyen d'une rondelle 3 réalisés, par exemple, en téflon, matériau possédant à la fois un bon coefficient d'isolation et un bon coefficient de frottement. En effet, le système doit être capable d'assurer, sans usure, un très grand nombre de manoeuvres (la distance parcourue par les contacts peut s'évaluer à plusieurs centaines de kilomètres, pendant leur durée de vie) ce qui nécessite une excellente qualité desdits contacts, d'autant plus que les courants à transmettre sont faibles.

L'ensemble de l'empilement est ensuite contraint au moyen d'une rondelle élastique 4 et fermé par un couvercle 7, fixé sur l'embout 6 au moyen, par exemple, d'une vis 8. Ce couvercle reçoit, en outre, le secteur 13 de rappel des feux indicateurs de position.

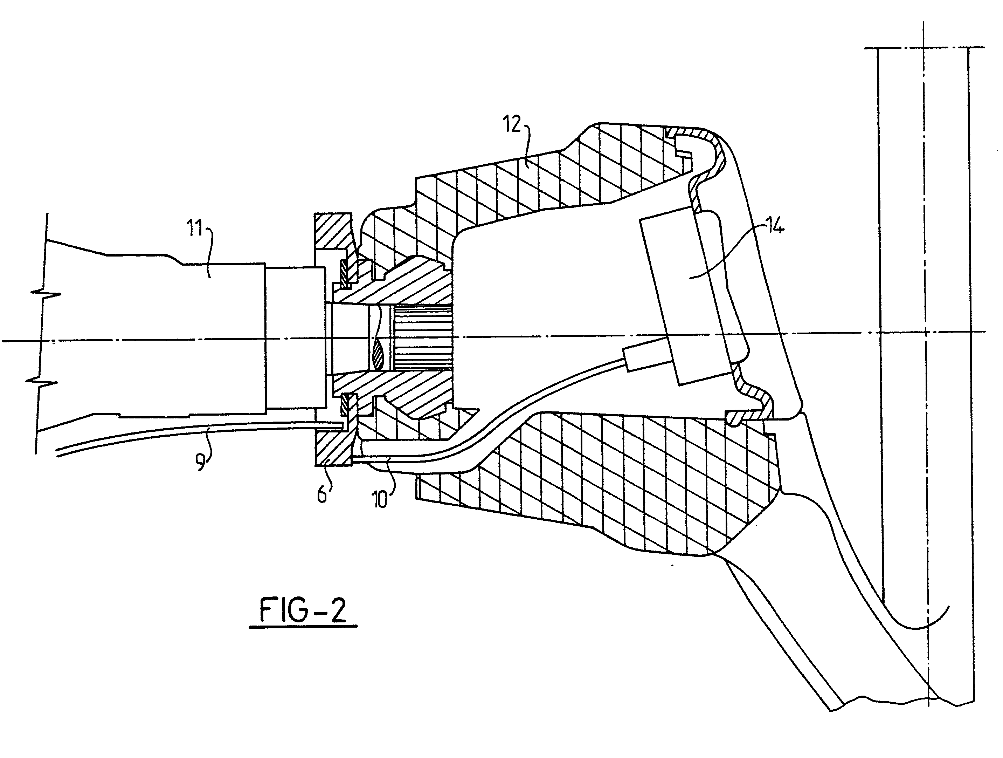

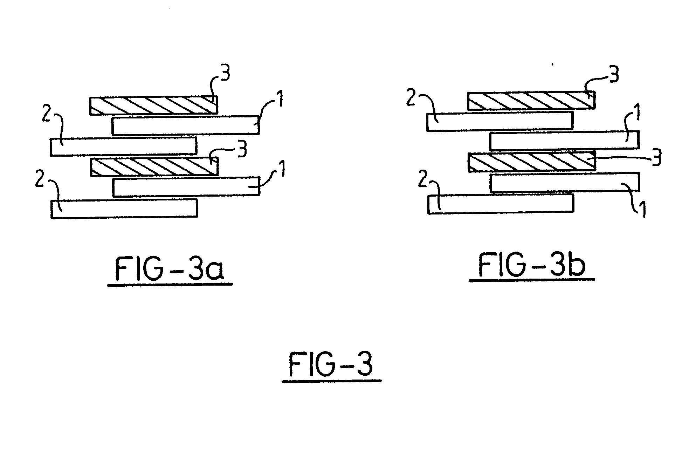

Dans l'exemple figuré, l'empilement des anneaux est composé de quatre paires permettant le passage de quatre informations. Bien entendu, ce nombre n'est pas limitatif et il peut varier en fonction du nombre de liaisons à effectuer. De même l'imbrication des anneaux extérieurs 1 et intérieurs 2 se fait de telle sorte que la rondelle isolante 3 se trouve contenue, soit entre un anneau intérieur 2 et un anneau extérieur 1 (fig. 3a), soit entre deux anneaux de même type (fig. 3b) alternativement extérieurs 1 et intérieurs 2. Cette deuxième solution présente l'avantage de réduire les frottements puisque la rondelle isolante se trouve intercalée entre deux anneaux immobiles l'un par rapport à l'autre. Une nappe de fils 9 reliés aux organes récepteurs est connectée sur la douille intérieure aux différents anneaux 2, tandis qu'une seconde nappe 10 est connectée sur l'embase 6 aux anneaux extérieurs 1 et se trouve reliée à son autre extrémité au commutateur 14 monté sur le volant 12 (fig. 2).

## Revendications

1. Bague de transmission électrique montée entre la colonne de direction et le volant d'un véhicule automobile pour assurer la liaison en rotation entre un commutateur de commande monté sur le volant et les récepteurs des organes à commander, la bague étant composée d'une série de n anneaux (2) conducteurs solidaires d'une douille (5) fixée sur la colonne de direction qui coopèrent électriquement avec une deuxième série de n anneaux (1) également conducteurs, solidaires en rotation d'une embase (6) fixée sur le volant, caractérisée en ce que chaque paire de contacts est formée par un anneau de chacune des deux séries et séparée des paires voisines au moyen d'une rondelle (3) électriquement isolante, ladite rondelle isolante (3) étant contenue alternativement entre deux anneaux (1) solidaires en rotation du volant puis entre deux anneaux (2) solidaires de la colonne de direction.

2. Bague de transmission selon la revendication 1, caractérisée en ce que l'ensemble de l'empilage des anneaux est contraint par une rondelle élastique.


**Patentansprüche**

1. Elektrischer Übertragungsring, der zwischen der Steuersäule und dem Lenkrad eines Kraftfahrzeuges montiert ist, um beim Rotieren eine Verbindung zwischen einem auf dem Lenkrad montierten Steuerschalter und den Empfängern der Steuerorgane zu gewährleisten, welcher Übertragungsring aus einer Reihe von n leitenden Ringen (2) zusammensetzt ist, die formschlüssig mit einer auf der Steursäule befestigten Buchse (5) verbunden sind, die mit einer zweite Reihe von n ebenfalls leitenden Ringen (1) elektrisch zusammenarbeiten, die drehfest mit einem an dem Lenkrad befestigten Ansatz (6) verbunden sind, dadurch gekennzeichnet, dass jedes Paar von Kontakten durch einen Ring von jeder der beiden Reihen gebildet ist und von den benachbarten Paaren mittels einer elektrisch isolierenden Scheibe (3) getrennt ist, welche isolierende Scheibe (3) abwechselnd zwischen zwei Ringen (1), die drehfest mit dem Lenkrad verbunden sind, und weiterhin zwischen zwei Ringen (2), die drehfest mit der Steuersäule verbunden sind, gehalten ist.

2. Elektrischer übertragungsring, nach Anspruch 1, dadurch gekennzeichnet, dass die gesamte Schichtung der Ringe durch eine elastische Scheibe zusammengehalten ist.


**Claims**

1. Electrical transmission slip ring mounted between the steering column and the steering wheel of a motor vehicle for ensuring the rotary connection between a control switch mounted on the steering wheel and the receiver devices of the members to be controlled, the slip ring being composed of a series of n conducting rings (2) integral with a socket (5) fixed to the steering column which cooperate electrically with a second series of n rings (1), which are also conducting, connected to rotate with a base (6) fixed to the steering wheel, characterised in that each pair of contacts is formed by a ring of each of the two series and separated from adjacent pairs by means of an electrically insulating washer (3), the said insulating washer (3) being contained alternately between two rings (1) connected to rotate with the steering wheel then between two rings (2) integral with the steering column.

2. Transmission slip ring according to the Claim 1, characterised in that the entire stack of rings is constrained by a resilient washer.

FIG-1

FIG-2

0 150 644

FIG-3a

FIG-3b

FIG-3